# EUROPEAN PATENT SPECIFICATION

(11) **EP 2 265 005 B1**
(45) Date of publication and mention of the grant of the patent: **17.08.2016**
(21) Application number: 10185442.0
(22) Date of filing: 23.01.1999
(51) Int. Cl.: H04N 5/445

(54) **Home entertainment system and method of its operation**
Unterhaltungssystem für Zuhause und entsprechendes Bedienungsverfahren
Système de loisirs domestiques et procédé de fonctionnement

(30) Priority: 23.01.1998 US 72396 P
(43) Date of publication of application: 22.12.2010
(62) Divisional of application: 99903323.6
(73) Proprietor: Rovi Guides, Inc., San Carlos, CA 94070 (US)
(72) Inventor: Yuen, Henry C., Pasadena, CA 91102-0438 (US); Ward, Thomas Edward III,, Weston, MA 02193 (US); Shalkey, Eric, Methuen, MA 01844 (US); Schoaff, Christopher P., Westford, MA 01886 (US)
(74) Representative: Pisani, Diana Jean

(56) References cited:
- WO-A1-96/37996
- WO-A1-97/19555
- WO-A1-97/41690
- US-A- 5 589 892

## Description

### BACKGROUND OF THE INVENTION

This invention relates to a home entertainment system and a method for its operation and, more particularly, to facilitation of electronic program guide (EPG) functions with respect to the promotion of future television programs in a home entertainment system.

United States Patent No. 4,977,455 which issued on December 11, 1990 discloses a system and process for supplying supplemental information after a user responds to a cue. The cue is provided during a broadcast to indicate the availability of the supplemental information relating to the broadcast. The supplemental information is preferably sent at a later time, although schedule information for the supplemental information is sent with the broadcast. After the user responds to the cue, the schedule information is first stored and is then used to record the supplemental information. In one embodiment, supplemental data is sent in the VBI of the video signal.

### SUMMARY OF THE INVENTION

According to one aspect of the invention, a current television program displayed on the screen of a home entertainment system includes an announcement or advertisement of a future television program. The availability of an electronic program guide function is signaled during, before, or after the announcement. A command is issued to invoke the EPG function. An EPG database for the home entertainment system includes files that contain information about television programs retrievable by time and channel. The files are linked to each other so information about a future television program can be obtained by accessing a file about a current television program. The information about the future television program is retrieved from the file about the current television program in the database. The EPG function is executed with the retrieved information. As a result, an EPG function can be performed with respect to a future television program without embedding information about the future television program in the television signal.

The invention can be used to perform various EPG functions, including, without limitation, record, watch, details, display time, display channel, display by theme, and Internet connection.

According to an optional feature of the invention, a menu of choices is displayed in response to a command after display of an icon signaling the availability of an EPG function during, before or after the announcement.

According to another optional feature of the invention, a plurality of icons are displayed on the screen to signal different EPG functions, which can be invoked by selecting the corresponding icon. WO 97/19555 relates to the display of an announcement of a second program during a first program

WO 96/37996 relates to a receiver for television signals arranged to receive video signals comprising video data and information data.

US 5,589,892 relates to an electronic program schedule system with access to both stored television program schedule information and data feeds containing status information for live programs such as sporting events.

WO 91/41690 relates to a display system which receives a data stream having successive image frame data in frame regions and Internet Universal Resource Locator (URL) data and association data in data regions between frame regions, and displays on a display monitor successive frames derived from the image frame data.

The present invention is set out in the independent claims, with some optional features set out in the claims dependent thereto.

### BRIEF DESCRIPTION OF THE DRAWINGS

The features of specific embodiments of the best mode contemplated of carrying out the invention are illustrated in the drawings, in which:
FIG. 1 is a schematic block diagram of a home entertainment system incorporating principals of the invention;
FIG. 2 is a diagram of a display screen illustrating an icon that signals the availability of an EPG function with respect to a future television program;
FIG. 3 is a diagram of a display screen prompting a viewer to select from among a number of EPG functions;
FIG. 4 is a diagram of a display screen prompting a viewer to select among choices for the frequency that a television program is to be recorded;
FIG. 5 is a diagram of a display screen illustrating the simultaneous display of a current television program and textual data from an Internet web site;
FIG. 6 is a diagram of a display screen illustrating an embodiment in which one or more announcements are stored for later use; and
FIG. 7 is a diagram of a display screen in which separate icons are used to signal the availability of different EPG functions.

### DETAILED DESCRIPTION OF SPECIFIC EMBODIMENTS

In a specific embodiment of the invention, an icon is displayed on a television screen during a telecast of an announcement or advertisement of a later telecast program or some other type of visual or audio signal alerts the viewer that an electronic program guide (EPG) function can be performed without actually entering the EPG or at least not entering the EPG from the beginning.

For example, if the viewer wants to record on a VCR the program being advertised, the viewer issues an appropriate command from a remote controller, e.g., clicks on the icon with the select or enter key of the remote, and the time and channel of the advertised program are stored in the recording stack memory of the VCR. Preferably, a message is displayed momentarily in a box on the screen to confirm that the function will be performed. If desired a query could also be displayed whether the program should be displayed once or on more occasions, e.g., daily or weekly.

Or, for example, if the viewer wants to see more details about the advertised program, the viewer clicks on the icon and the details are retrieved from the RAM in which the EPG data is stored and either replace the advertisement on the screen or are displayed in an on-screen box. Alternatively, the advertisement could be displayed in a PIP window.

Or, for example, if the viewer wishes to see what other programs are being telecast at the same time, on the same channel, or with the same theme as the advertised program, the viewer clicks on the icon and the EPG is displayed for the same day and time, the same channel, or the same theme as the advertised program.

If more than one function is available to the viewer, the choice of functions is first displayed in a menu when the viewer clicks on the icon and the function is executed when the viewer thereafter clicks on one of the displayed choices.

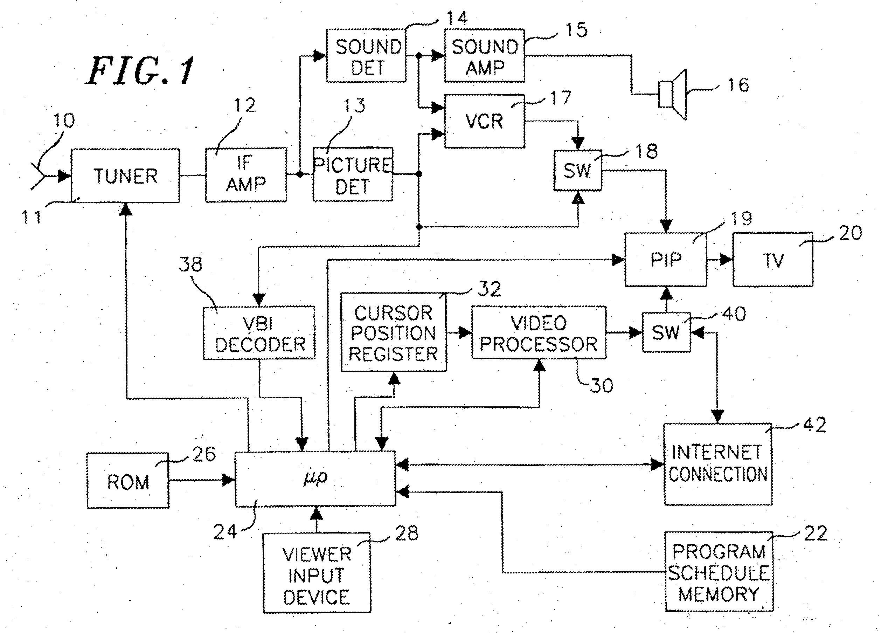

A home entertainment system is shown in FIG. 1. A source of television signals 10 such as a terrestrial antenna, or a cable is connected to a television tuner 11. The output of tuner 11 is a modulated intermediate frequency signal containing video and audio television information. Tuner 11 is connected by an intermediate frequency amplifier (IF AMP) 12 to a picture detector (PICTURE DET) 13 and a sound detector (SOUND DET) 14, which produce base band video and audio signals, respectively. The audio signal is coupled by a sound amplifier (SOUND AMP) 15 to a loudspeaker 16. The video signal is coupled by a video amplifier not shown to one input of a switch 18. Sound detector 14 and picture detector 13 are connected to the audio and video inputs, respectively, of a video cassette recorder (VCR) 17. (Alternatively, television signal source 10 could be directly connected to the RF input of VCR 17 in well known fashion, if its internal tuner and demodulating circuitry are to be utilized.) The output of VCR 17 is connected to the other input of switch 18. The output of switch 18 is connected to one input of a conventional picture-in-picture (PIP) integrated circuit chip 19. The output of PIP chip 19 is connected to the video input of a television receiver or display monitor (TV) 20 having a screen (not shown).

An updatable data base of the schedule of program listings of all the available channels for a prescribed period of time, e.g., a day or a week, is electronically stored in a program schedule memory 22, preferably a RAM. Memory 22 is connected to a microprocessor 24 that is configured, i.e., programmed, to control the operation of the described equipment. An operating program for microprocessor 24 is stored in a read only memory (ROM) 26. These program listings typically include for each program the title, a program description (detail), the day of the week, the start time of the day, the program length, and the channel on which the program is transmitted and thus available for reception at source 10. These program listings are retrievable by time and channel. Further, to implement the invention these program listings are organized into files; the files are linked to each other so information about a future television program that is advertised in an earlier television program can be obtained by accessing a file about the earlier television program. The data base can be updated by a data transmission link in the vertical blanking interval (VBI) of a television channel broadcast to the television receiver: in well known fashion. A VBI decoder 38 is connected between PICTURE DET 13 and microprocessor 24 for this purpose. Alternatively, the data base can be updated by unplugging memory 22 and replacing it with a memory having the updated data base or by another data transmission link such as an Internet connection or a pager in the 900MHz band. A viewer input device 28, preferably in the form of a remote IR controller, is coupled to microprocessor 24 to issue commands from the viewer. A video processor 30 is coupled to microprocessor 24. When the viewer wishes to see television program listings, microprocessor 24 recalls a portion of the program schedule data base from memory 22 and couples it to video processor 30, where the program listings are formatted for display. Preferably, the information stored in video processor 30 is a bit map of what is displayed on the screen of television receiver 20. Video processor 30 is connected through a switch 40 to the other input of PIP chip 19. Preferably, viewer input device 28 controls microprocessor 24 by cursor movement on the screen of television receiver 20. To this end, microprocessor 24 and video processor 30 are coupled to a cursor position register 32. (Alternatively, the viewer can select items of information displayed on the screen by keying into viewer input device 28 code numbers assigned to these items.) Microprocessor 24 is also coupled to tuner 11 for channel change, to VCR 17 for play/record selection and start/stop, to switches 18 and 40 for selection of one of their inputs, and to PIP chip 19 for selection of the mode of PIP operation. An Internet connection 42 through a telephone line or bidirectional cable is controlled by microprocessor 24. Microprocessor 24 retrieves the address of the web site to which the viewer wants to connect. Internet connection 42 has the components required for implementing Web TV. The informatioin recovered from the addressed web site is coupled from Internet connection 42 through switch 40 to the one input of PIP chip 19 for display on the screen of TV 20.

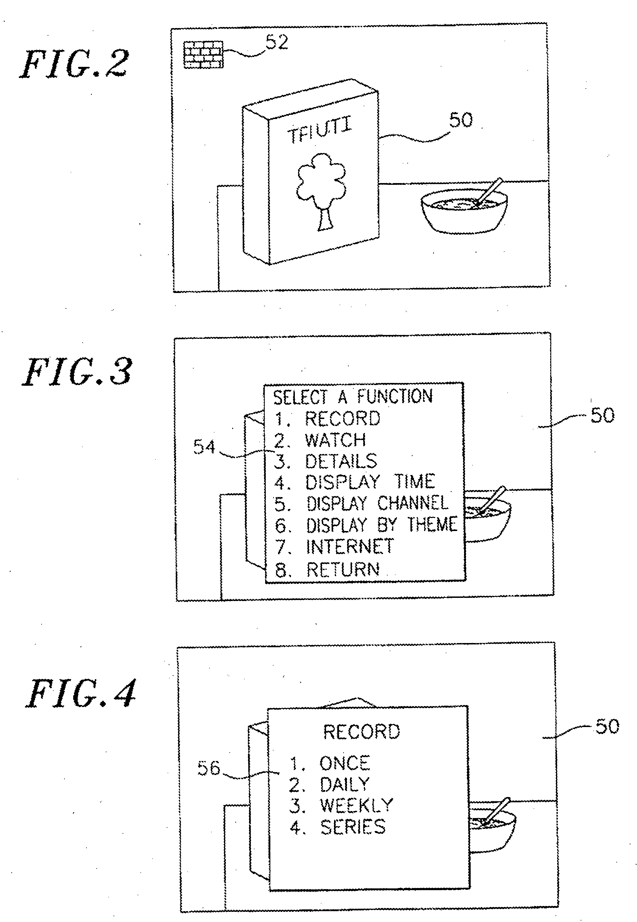

In operation, tuner 11 is set to a viewer selected channel by microprocessor 24 responsive to input device 28. During a commercial break in the television program on the selected channel, an announcement or advertisement for another television program to be telecast at a later time is displayed on the screen of TV 20. Transmitted as part of the image of the advertisement is an icon that signals to the viewer that it is possible to link to an EPG function. Alternatively, the icon could be transmitted in the VBI during the advertisement, recovered by VBI decoder 38, transformed into graphic form in video processor 30, and overlayed on the image of the advertisement. (If desired the icon could be displayed immediately before or immediately after the advertisement.) The advertisement designated 50 and an icon 52 are illustrated in FIG. 2.

When the viewer issues a command from input device 28, by either pushing a dedicated key or positioning a cursor over icon 52 with arrow keys and clicking an all purpose actuator (enter) key, a box 54 is overlayed over advertisement 50 as illustrated in FIG. 3 to prompt the viewer to invoke an EPG function. A menu of EPG functions is displayed in box 54, namely:
1. record the advertised program when it is telecast at a later time;
2. turn the television on to watch the advertised program when it is telecast at a later time;
3. display details of the advertised program now;
4. display a listing of programs telecast at the same time as the advertised program so the viewer can compare the advertised program with other offerings at the same time;
5. display a listing of programs telecast on the same channel as the advertised program so the viewer can compare the advertised program with other offerings on the same channel;
6. display a listing of programs in the same category or theme as the advertised program so the viewer can determine the availability of programs of the same genre as the advertised program;
7. connect to the Internet to obtain more details about the advertised program than are available through the details function; and
8. return to the television program.

The viewer selects one of the functions for example by moving a cursor to the menu item and then issuing another command to invoke the selected function. For example, the viewer could highlight "3." and click to display details about the advertised program.

If the viewer wishes to extinguish box 50, the viewer selects "8", the return function. Other functions not listed in FIG. 3 could also be offered. For example, all the times the advertised program is telecast could be displayed on the screen or a news story related to the advertised program could be displayed on the screen, particularly in the case of a sporting event.

The EPG information about the television programs is retrievable by time and channel; for example a pre-established time list includes addresses that point to show information packages (SIP) for the television programs. Each television program that has an icon 52 includes in its SIP an address pointing to the schedule information, i.e., day, time, channel, and length, of the advertised program to be telecast at a later time, thereby linking the information of the two television programs. If the "record" or "watch" function is selected, the channel is read from tuner 11 and the time is read from a real time clock in microprocessor 24. From this information, the pointer of the SIP for the current television program is retrieved from the pre-established time list. The retrieved pointer permits microprocessor 24 to find the SIP for the current television program, which contains the address pointing to the schedule information for the advertised program. The schedule information is stored in a memory stack so microprocessor 23 can set tuner 11 to the proper channel and turn on the VCR for unattended future recording or turn on the television for automatic future watching at the appointed time in well known fashion.

The program listing files stored in memory 22 could be organized in any number of other ways so long as the information about the future programs being advertised is "linked" to a current program, i.e., can be retrieved when a current program is being displayed with an EPG function signaling icon. For example, the information about the future programs could be linked to the current programs including advertisements by being part of the same file as the current programs instead of being linked by a pointer.

When the record function is selected, a box 56 is overlaid on advertisement 50 as illustrated in FIG. 4 to prompt the viewer to select a record option. A menu of record options is displayed in box 56. (These record options are also considered to be EPG functions as the term is used herein because they are functions that can normally be performed by an EPG.) The viewer can record the advertised program as follows:
- 1.: once;
- 2.: daily;
- 3.: weekly; or

- 4.: each time program in a series (e.g., the NBA championship games) is telecast.

The viewer selects one of the record options for example by moving a cursor to a menu item, e.g., "3." and clicking to record the advertised program weekly.

As an additional feature, if the series option is selected in FIG. 4, a list of each occurrence of the episodes of the series may be displayed; when a particular episode is selected, a synopsis of the episode would then be displayed. From the synopsis the viewer could select individual episodes of the series to schedule to watch or record.

The menus shown in FIGS. 3 and 4 could be stored in memory 22 along with the EPG data base and overlayed on the image of the advertisement by means of a video switch or other means not represented in FIG. 1.

If the detail function is selected, the detail (program description) information is retrieved from the SIP of the future program being advertised and displayed on the screen of TV 20.

If the time, channel, or theme function is selected, the channel is read from tuner 11 and the time is read from a real time clock in microprocessor 24. From this information, the pointer or pointers of the desired SIP or SIP's are retrieved from the preestablished time list. The retrieved pointer or pointers permit microprocessor 24 to find the desired SIP or SIP's, from which the program listings for the same time, channel, or theme as the advertised program are extracted and fed to video processor 30 for display on the screen of the monitor in the same manner as the data for an ordinary guide.

Alternatively, if the time or channel function is selected, the time and channel in a grid guide could be displayed so the viewer can see the other programs available on the same channel or at the same time in a grid guide format. In this case, an advertised program or a program telecast at about the same time or on the same channel can be directly scheduled for recording or watching by using the scheduling capability of the guide itself.

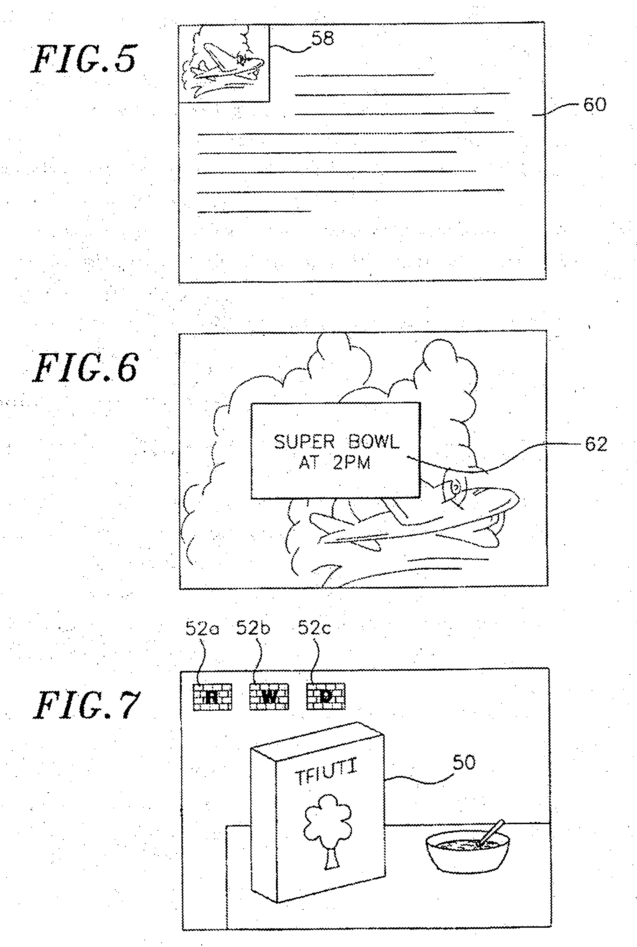

If the Internet function is selected, the system sets up a connection to a web site where more information is available about the other television program to which the announcement or advertisement relates. The web site address (URL) could be embedded in the VBI of the television signal that carries the announcement, stored at the television receiver in the EPG data base as part of the SIP for the current television program, or retrieved from a central data base via a telephone connection. After the Internet connection is established, as illustrated in FIG. 5, the television program is displayed in a PIP window 58 with the web site information in the background 60, or vis-a-versa. Alternatively, the web site information could replace the television program on the screen. In either case, the viewer can navigate about the web site in the normal fashion to find the desired information.

Instead of appearing during an announcement or advertisement, icon 52 could appear during a television program itself. When the viewer issues the command in response to icon 52, a box 62 is displayed on the screen. An announcement or advertisement of the later telecast program appears in box 62. If the viewer is interested in the later telecast program, the viewer issues another command from input device 28 and box 54 (FIG. 3) is displayed as described above.

Instead of an announcement or advertisement of a later telecast program, the announcement could relate to a current program on another channel. This is particularly applicable to a network that telecasts a plurality of programs concurrently on different channels, as is the case in the HDTV environment. The network can thus promote its other program offerings being telecast at the same time. The viewer can record the other program and continue to watch the program he or she had been watching. Thus, the term "future programs" in this specification is used for ease of comprehension of the inventive principles, but this term also refers to a current program on another channel.

Another alternative is to store one or more announcements of a later telecast program or programs while the television set is turned off. After the television set is turned on, icon 52 is displayed on the screen to alert the viewer that there are stored announcements. As the viewer issues a command from input device 28, the announcements appear on the screen, as illustrated in FIG. 6, in succession. If the viewer is interested in the announced program, the viewer issues another command from input device 28 and box 54 (FIG. 3) is displayed as described above.

Instead of a single icon 52 (FIG. 1) that invokes a menu of choices of EPG functions (FIG. 3), a plurality of icons 52a, 52b, and 52c could be displayed as shown in FIG. 7 to bypass the menu of FIG. 3. Each icon is marked with a mnemonic to enable the viewer to distinguish it from the other icons, e.g., "R" stands for "record", "W" stands for "watch", and "D" stands for "details". When the viewer selects one of the icons, e.g., by clicking on the selected icon, the corresponding EPG function is invoked directly.

The described embodiments of the invention are only considered to be preferred and illustrative of the inventive concept; the scope of the invention is not to be restricted to such embodiment. Various and numerous other arrangements may be devised by one skilled in the art without departing from the scope of this invention. For example, although a visual icon is preferred, an audible signal could be given to alert the viewer to the presence of an announcement or advertisement. Further, if only the record function is available, the menu of FIG. 3 could be bypassed and the menu of FIG. 4 could be displayed directly; alternatively, if only one other EPG function is available, the menu of FIG. 3 could be bypassed in favor of a prompt to confirm the EPG function or the display of some other appropriate prompting menu.

## Claims

1. A method for executing an EPG function with respect to a program, the method comprising:
causing a first program to be displayed;
storing a first file including information about the first program and a link to a second file, the second file including information about the second program, the information about the second program being obtainable by accessing the link in the first file about the first program;
generating for display, during the first program, an announcement or advertisement of the second program and an icon that signals the availability of a function with respect to the second program;
receiving, during the first program, a user command responsive to the icon;
in response to receiving the user command, retrieving the information about the second program by accessing the link in the first file about the first program; and
executing the EPG function with respect to the second program using the retrieved information about the second program.

2. The method of claim 1, wherein the user command is a user selection of an icon.

3. The method of claim 1, further comprising generating for display a menu of a plurality of functions in response to receiving the user command, wherein the executed EPG function is one of the plurality of functions.

4. The method of claim 1, wherein executing the EPG function comprises recovering information from a web site.

5. The method of claim 4, wherein the information about the second program comprises an address for the web site.

6. The method of claim 4, wherein executing the EPG function further comprises generating for display the recovered information.

7. The method of claim 1, wherein executing the EPG function comprises generating for display details about the second program in an on-screen box.

8. A system for executing a an EPG function with respect to a program, the system comprising:
a receiver device configured to receive user command signals;
a control unit responsive to the received user command signals and configured to:
cause the display of a first program on a display;
access a first file including information about the first program and a link to a second file, the second file including information about a second program, the information about the second program being obtainable by accessing the link in the first file about the first program;
generating for display, during the first program, an announcement or advertisement of the second program and an icon that signals the availability of a function with respect to the second program;
receive, during the first program, a user command responsive to the icon;
respond to the received user command signal by retrieving the information about the second program by accessing the link in the first file about the first program; and
cause the execution of the EPG function with respect to the second program using the retrieved information about the second program.

9. The system of claim 8, wherein the user command is a user selection of an icon.

10. The system of claim 8, the control unit further configured to cause the display of a menu of a plurality of functions in response to receiving the user command, wherein the executed EPG function is one of the plurality of functions.

11. The system of claim 8, wherein executing the EPG function comprises recovering information from a web site.

12. The system of claim 11, wherein the information about the second program comprises an address for the web site.

13. The system of claim 11, wherein executing the EPG function further comprises generating for display the recovered information.

14. The system of claim 8, wherein executing the EPG function comprises generating for display details about the second program in an on-screen box.

## Patentansprüche

1. Verfahren zum Ausführen einer EPG-Funktion im Hinblick auf ein Programm, das Verfahren umfassend:
Veranlassen, dass ein erstes Programm angezeigt wird;
Speichern einer ersten Datei, die Informationen über das erste Programm und eine Verknüpfung zu einer zweiten Datei beinhaltet, wobei die zweite Datei Informationen über das zweite Programm beinhaltet, wobei die Informationen über das zweite Programm durch Zugreifen auf die Verknüpfung in der ersten Datei über das erste Programm erlangt werden können;
Erzeugen einer Ansage oder Werbung für das zweite Programm und eines Icons, das die Verfügbarkeit einer Funktion im Hinblick auf das zweite Programm signalisiert, zur Anzeige während des ersten Programms;
Empfangen, während des ersten Programms, eines Benutzerbefehls in Reaktion auf das Icon;
in Reaktion auf das Empfangen des Benutzerbefehls, Abrufen der Informationen über das zweite Programm durch Zugreifen auf die Verknüpfung in der ersten Datei über das erste Programm; und
Ausführen der EPG-Funktion im Hinblick auf das zweite Programm unter Verwendung der abgerufenen Informationen über das zweite Programm.

2. Verfahren nach Anspruch 1, wobei der Benutzerbefehl eine Benutzerauswahl eines Icons ist.

3. Verfahren nach Anspruch 1, ferner umfassend das Erzeugen eines Menüs einer Vielzahl von Funktionen in Reaktion auf das Empfangen des Benutzerbefehls zur Anzeige, wobei die ausgeführte EPG-Funktion eine von der Vielzahl von Funktionen ist.

4. Verfahren nach Anspruch 1, wobei das Ausführen der EPG-Funktion das Abrufen von Informationen von einer Website umfasst.

5. Verfahren nach Anspruch 4, wobei die Informationen über das zweite Programm eine Adresse für die Website umfassen.

6. Verfahren nach Anspruch 4, wobei das Ausführen der EPG-Funktion ferner das Erzeugen der abgerufenen Informationen zur Anzeige umfasst.

7. Verfahren nach Anspruch 1, wobei das Ausführen der EPG-Funktion das Erzeugen von Einzelheiten über das zweite Programm zur Anzeige in einem Bildschirmfeld umfasst.

8. System zum Ausführen einer EPG-Funktion im Hinblick auf ein Programm, das System umfassend:
eine Empfängervorrichtung, die konfiguriert ist, um Benutzerbefehlssignale zu empfangen;
eine Steuereinheit, die auf die empfangenen Benutzerbefehlssignale reagiert und konfiguriert ist, um:
die Anzeige eines ersten Programms auf einer Anzeige zu veranlassen;
auf eine erste Datei zuzugreifen, die Informationen über das erste Programm und eine Verknüpfung zu einer zweiten Datei beinhaltet, wobei die zweite Datei Informationen über ein zweites Programm beinhaltet, wobei die Informationen über das zweite Programm durch Zugreifen auf die Verknüpfung in der ersten Datei über das erste Programm erlangt werden können;
eine Ansage oder Werbung für das zweite Programm und ein Icon, das die Verfügbarkeit einer Funktion im Hinblick auf das zweite Programm signalisiert, zur Anzeige während des ersten Programms zu erzeugen;
während des ersten Programms einen Benutzerbefehl in Reaktion auf das Icon zu empfangen;
auf das empfangene Benutzerbefehlssignal zu reagieren, indem die Informationen über das zweite Programm abgerufen werden, indem auf die Verknüpfung in der ersten Datei über das erste Programm zugegriffen wird; und
die Ausführung der EPG-Funktion im Hinblick auf das zweite Programm unter Verwendung der abgerufenen Informationen über das zweite Programm zu veranlassen.

9. System nach Anspruch 8, wobei der Benutzerbefehl eine Benutzerauswahl eines Icons ist.

10. System nach Anspruch 8, wobei die Steuereinheit ferner konfiguriert ist, um die Anzeige eines Menüs einer Vielzahl von Funktionen in Reaktion auf das Empfangen des Benutzerbefehls zu veranlassen, wobei die ausgeführte EPG-Funktion eine der Vielzahl von Funktionen ist.

11. System nach Anspruch 8, wobei das Ausführen der EPG-Funktion das Abrufen von Informationen von einer Website umfasst.

12. System nach Anspruch 11, wobei die Informationen über das zweite Programm eine Adresse für die Website umfassen.

13. System nach Anspruch 11, wobei das Ausführen der EPG-Funktion ferner das Erzeugen der abgerufenen Informationen zur Anzeige umfasst.

14. System nach Anspruch 8, wobei das Ausführen der EPG-Funktion das Erzeugen von Einzelheiten über das zweite Programm zur Anzeige in einem Bildschirmfeld umfasst.

## Revendications

1. Procédé d'exécution d'une fonction EPG (guide électronique des programmes) en rapport avec un programme, le procédé comprenant les étapes consistant à :
afficher un premier programme ;
stocker un premier fichier comprenant des informations concernant le premier programme et un lien vers un second fichier, le second fichier comprenant des informations concernant le second programme, les informations concernant le second programme pouvant être obtenues en accédant au lien dans le premier fichier concernant le premier programme ;
générer pour affichage, pendant le premier programme, d'une annonce ou d'une publicité du second programme et une icône qui signale la disponibilité d'une fonction en rapport avec le second programme ;
recevoir, pendant le premier programme, une commande d'utilisateur en réaction à l'icône ;
en réponse à la réception de la commande d'utilisateur, extraire les informations concernant le second programme en accédant au lien dans le premier fichier concernant le premier programme ; et
exécuter la fonction EPG en rapport avec le second programme en utilisant les informations extraites concernant le second programme.

2. Procédé selon la revendication 1, dans lequel la commande d'utilisateur est une sélection d'une icône par un utilisateur.

3. Procédé selon la revendication 1, comprenant en outre la génération pour affichage d'un menu d'une pluralité de fonctions en réponse à la réception de la commande d'utilisateur, dans lequel la fonction EPG exécutée est l'une de la pluralité de fonctions.

4. Procédé selon la revendication 1, dans lequel l'exécution de la fonction EPG comprend la récupération d'informations à partir d'un site Web.

5. Procédé selon la revendication 4, dans lequel les informations concernant le second programme comprennent une adresse du site Web.

6. Procédé selon la revendication 4, dans lequel l'exécution de la fonction EPG comprend en outre la génération pour affichage des informations récupérées.

7. Procédé selon la revendication 1, dans lequel l'exécution de la fonction EPG comprend la génération pour affichage de précisions concernant le second programme dans un cadre à l'écran.

8. Système permettant l'exécution d'une fonction EPG en rapport avec un programme, le système comprenant :
un dispositif récepteur configuré pour recevoir des signaux de commande d'utilisateur ;
une unité de commande réagissant aux signaux de commande d'utilisateur reçus et configurée pour :
un affichage d'un premier programme sur un écran d'affichage ;
accéder à un premier fichier comprenant des informations concernant le premier programme et un lien vers un second fichier, le second fichier comprenant des informations concernant un second programme, les informations concernant le second programme pouvant être obtenues en accédant au lien dans le premier fichier concernant le premier programme ;
générer pour affichage, pendant le premier programme, une annonce ou une publicité du second programme et une icône qui signale la disponibilité d'une fonction en rapport avec le second programme ;
recevoir, pendant le premier programme, une commande d'utilisateur en réaction à l'icône ;
répondre au signal de commande d'utilisateur reçu en extrayant les informations concernant le second programme en accédant au lien dans le premier fichier concernant le premier programme ; et
exécuter la fonction EPG en rapport avec le second programme en utilisant les informations extraites concernant le second programme.

9. Système selon la revendication 8, dans lequel la commande d'utilisateur est une sélection d'une icône par un utilisateur.

10. Système selon la revendication 8, l'unité de commande étant en outre configurée pour produire l'affichage d'un menu d'une pluralité de fonctions en réponse à la réception de la commande d'utilisateur, dans lequel la fonction EPG exécutée est l'une de la pluralité de fonctions.

11. Système selon la revendication 8, dans lequel l'exécution de la fonction EPG comprend la récupération d'informations à partir d'un site Web.

12. Système selon la revendication 11, dans lequel les informations concernant le second programme comprennent une adresse du site Web.

13. Système selon la revendication 11, dans lequel l'exécution de la fonction EPG comprend en outre la génération pour affichage des informations récupérées.

14. Système selon la revendication 8, dans lequel l'exécution de la fonction EPG comprend la génération pour affichage de précisions concernant le second programme dans un cadre à l'écran.
